# EUROPÄISCHE PATENTSCHRIFT

(11) **EP 2 715 890 B1**
(45) Veröffentlichungstag und Bekanntmachung des Hinweises auf die Patenterteilung: **31.07.2019**
(21) Anmeldenummer: 12719594.9
(22) Anmeldetag: 04.05.2012
(51) Int. Cl.: H02B 1/00

(54) **VERBINDER VON GERÄTEN MIT GLEICHARTIGEN ANSCHLÜSSEN UND UMRICHTERANORDNUNG**
CONNECTOR FOR DEVICES WITH IDENTICAL CONNECTIONS AND CONVERTER ARRANGEMENT
CONNECTEUR D'APPAREILS DOTÉ DE RACCORDS SIMILAIRES ET DISPOSITIF CONVERTISSEUR

(30) Priorität: 30.05.2011 DE 102011103599
(43) Veröffentlichungstag der Anmeldung: 09.04.2014
(73) Patentinhaber: SEW-EURODRIVE GmbH & Co. KG, 76646 Bruchsal (DE)
(72) Erfinder: OTT, Jürgen, 76706 Dettenheim (DE); MARAHRENS, Klaus, 76337 Waldbronn-Reichenbach (DE); WACKER, Maik, 76684 Östringen (DE)
(86) Internationale Anmeldenummer: PCT/EP2012/001910
(87) Internationale Veröffentlichungsnummer: WO 2012/163461

(56) Entgegenhaltungen:
- WO-A1-94/29885
- DE-A1- 19 717 550
- WIJENAYAKE A H ET AL: "Modeling and analysis of shared/common DC bus operation of AC drives. I", INDUSTRY APPLICATIONS CONFERENCE, 1997. THIRTY-SECOND IAS ANNUAL MEETI NG, IAS '97., CONFERENCE RECORD OF THE 1997 IEEE NEW ORLEANS, LA, USA 5-9 OCT. 1997, NEW YORK, NY, USA,IEEE, US, Bd. 1, 5. Oktober 1997 (1997-10-05), Seiten 599-604, XP010248632, DOI: 10.1109/IAS.1997.643129 ISBN: 978-0-7803-4067-1

## Beschreibung

Die Erfindung betrifft einen Verbinder, also Adapter, von Geräten mit gleichartigen Anschlüssen und eine Umrichteranordnung.

Es ist bekannt, Zwischenkreise von Umrichtern großer Leistung auf Stromschienen zu führen, da flexible Kabel nur geringe Stromstärken erlauben. Flexible Kabel haben beispielsweise einen Querschnitt von 10 mm^2 bis 30 mm^2.

Aus der DE 10 2008 062 108 A1 ist ein Adapter für ein Umrichtersystem bekannt.

Aus der DE 196 22 895 A1 ist eine Anschlussvorrichtung sowie ein Verfahren zu deren Herstellung bekannt.

Aus der DE 93 03 886 U1 ist ein Stromschienenpaket bekannt.

Aus der DE 88 13 533 U1 ist ein isolierendes Stromschienenpaket bekannt.

Aus der DE 31 21 964 A1 ist ein Sammelschienblock bekannt.

Aus der DE 197 17 550 A1 ist ein flaches Stromschienenpaket für ein Stromrichtergerät bekannt.

Das Dokument WO94/29885 offenbart einen Verbinder von Geräten mit gleichartigen Anschlüssen, wobei der Verbinder einen von einer elektrisch isolierenden Umhüllung umschlossenen Stapel von Stromschienen aufweist, wobei der Stapel zwischen den Stromschienen angeordnete Isolierschichten aufweist, die Stromschienen derart kontaktiert sind, dass zwei oder mehr parallel im Stapel angeordnete Stromschienen auf demselben elektrischen Potential liegen.

Der Erfindung liegt daher die Aufgabe zugrunde, einfach und kostengünstig Schwankungen der Zwischenkreisspannung von Umrichtern zu reduzieren.

Erfindungsgemäß wird die Aufgabe bei dem Verbinder, also Adapter, nach den in Anspruch 1 und bei der Umrichteranordnung nach den in Anspruch 12 angegebenen Merkmalen gelöst.

Wichtige Merkmale bei dem Verbinder von Geräten mit gleichartigen Anschlüssen nach Anspruch 1 sind, dass der Verbinder einen von einer elektrisch isolierenden Umhüllung umschlossenen Stapel von Stromschienen aufweist,
wobei der Stapel zwischen den Stromschienen angeordnete Isolierschichten aufweist,
wobei die Stromschienen derart mit laschenartigen Abschnitten kontaktiert sind, dass zwei oder mehr parallel im Stapel angeordnete Stromschienen auf demselben elektrischen Potential liegen,
wobei im Stapel jeweils benachbarte, mittels einer Isolierschicht getrennte Stromschienen Stromschienen nicht mit denselben laschenartigen Abschnitten kontaktiert sind, insbesondere so dass sie auf ein anderes Potential legbar sind.

Von Vorteil ist bei der Erfindung nach Anspruch 1, dass bis auf die laschenartigen Abschnitte zur Verbindung der Zwischenkreise eine elektrische Isolierung gegen Berührung vorgesehen ist und somit die Gefahr für Menschen reduzierbar ist. Außerdem ermöglicht der schichtartige Aufbau einen möglichst geringen elektrischen Durchleitungswiderstand. Dabei ist der Widerstand weiter reduzierbar durch kühlkörperartig wirkende Vergrößerung der Stromschiene, so dass der Ohmsche Widerstand und die damit verbundenen Verluste reduzierbar sind. Auf diese Weise sind die Zwischenkreise von Umrichtern mittels des Adapters einfach und kostengünstig verbindbar und somit die Zwischenkreiskapazität etwas vergrößerbar ohne zusätzliche Kondensatoren oder eine vergrößerte Kapazität vorzusehen. Somit sind durch die vergrößerte Kapazität Schwingungen beziehungsweise Schwankungen der Zwischenkreisspannung verringerbar. Außerdem sind Resonanzen zu höheren Frequenzen verschiebbar, indem der Adapter eine verringerte Streckeninduktivität für den durch ihn durchgeleiteten Strom aufweist.

Der schichtartige Aufbau bewirkt mittels der durch die plattenartig verbreiterten Stromschienen eine Verringerung der Induktivität des Adapters und somit ein Verschieben der Resonanzfrequenzen, die vom aus der Induktivität des Adapters und den Zwischenkreiskapazitäten der Umrichter gebildeten Schwingkreis bewirkt sind, hin zu hohen Frequenzen. Die Kapazität des schichtartigen Aufbaus ist zwar erhöht im Vergleich zu einem Verbindungskabel, jedoch sind die Zwischenkreiskapazitäten der zu verbindenden Umrichter viel größer.

Bei einer vorteilhaften Ausgestaltung sind zur Durchführung eines ersten Potentials zwei oder mehr parallel angeordnete Stromschienen, insbesondere gleichartig ausgeführte, verwendet. Von Vorteil ist dabei, dass die Streckeninduktivität verringerbar ist und der Ohmsche Widerstand ebenfalls verringert ist, da der Ohmsche Widerstand infolge der verwendeten großen Kühlfläche und somit niedrigen Temperatur verringerbar ist.

Bei einer vorteilhaften Ausgestaltung ist jede Stromschiene beidseitig direkt benachbart von einer jeweiligen Stromschiene, die unterschiedliches Potential führt. Bei einer vorteilhaften Ausgestaltung führen zwei zueinander nächstbenachbarte Stromschienen jeweils unterschiedliches Potential. Von Vorteil ist dabei, dass die Induktivität gegenüber dem durch den Adapter durchgeleiteten Strom verringerbar ist.

Bei einer vorteilhaften Ausgestaltung umfasst das gehäusebildend umgebende Isoliermittel zumindest einen Schrumpfschlauch, insbesondere zwei Schrumpfschläuche umfasst. Von Vorteil ist dabei, dass eine einfache Fertigung ermöglicht ist, indem der Adapter in eine Öffnung, insbesondere in eine durchgehende Öffnung des Schrumpfschlauches einführbar ist und nach dem Einführen der Schrumpfschlauch erhitzbar ist, so dass er sich zusammenzieht um die von ihm umgebene Stromschienenanordnung.

Bei einer vorteilhaften Ausgestaltung ist das jeweils zwischen den Stromschienen angeordnete Isoliermittel eine Isolierfolie. Von Vorteil ist dabei, dass eine einfache kostengünstige Ausführung ermöglicht ist.

Bei einer vorteilhaften Ausgestaltung ist jede Stromschiene als Stanzteil und/oder Stanz-Biegeteil gefertigt, insbesondere aus Kupfer-haltigem Blech. Von Vorteil ist dabei, dass eine einfache Fertigung aus Kupferblech ermöglicht ist.

Bei einer vorteilhaften Ausgestaltung sind die Stromschienen gleichartig ausgeführt. Von Vorteil ist dabei, dass nur ein einziger Typ von Stromschiene zu fertigen ist, also auch nur ein entsprechendes Werkzeug notwendig ist.

Bei einer vorteilhaften Ausgestaltung weisen die Stromschienen jeweils einen rechteckförmigen plattenförmigen Grundkörper auf, an dem laschenartige Abschnitte, insbesondere Fortsätze, herausragen,
insbesondere welche eine Ausnehmung, insbesondere Loch, aufweisen zur Durchführung einer Verbindungsschraube. Von Vorteil ist dabei, dass eine Kontaktierung in einfacher Weise ermöglicht ist. Außerdem ist der zwischen den Umrichtern zugängliche Teil des Adapters mit dem Isoliermittel isolationsfest ausführbar. Durch die Ausführung als plattenförmiger Grundkörper ist eine platzsparende Ausführung ermöglicht. Außerdem ist eine große Oberfläche für den durchzuleitenden Strom vorhanden, wodurch die Auswirkungen des Skin-Effekts verringerbar sind und ein niedriger Ohmscher Widerstand erreichbar ist. Durch einen zum durchgeleiteten Strom wirksamen, in Durchleitungsrichtung zunehmenden Querschnitt ist eine verbesserte Kühlung erreichbar. Denn die Stromschiene ist verbreitert ausgeführt und somit mit einer großen Oberfläche zur Abfuhr von Wärme an die Umgebung.

Bei einer vorteilhaften Ausgestaltung sind die laschenartigen Abschnitte, insbesondere Fortsätze, an zwei gegenüberliegenden Seiten des Grundkörpers angeordnet. Von Vorteil ist dabei, dass
Bei einer vorteilhaften Ausgestaltung ist für den an einem laschenartigen Abschnitt eintretenden Strom beim Durchströmen der Stromschiene bis zum Heraustreten an dem gegenüberliegenden laschenartigen Abschnitt ein zunächst zunehmender und dann wieder abnehmender Querschnitt wirksam. Von Vorteil ist dabei, dass einerseits der Ohmsche Widerstand verringert ist und andererseits die Temperatur durch die verbesserte Wärmeabfuhr verringert ist, so dass auch hierdurch der Ohmsche Widerstand und somit auch die Ohmschen Verluste verringert sind.

Bei einer vorteilhaften Ausgestaltung weist die Stromschiene einen Kühlkörperbereich auf, insbesondere mit einer oder mehreren Kühlrippen. Von Vorteil ist dabei, dass die Entwärmung weiter verbessert ist und somit die Temperatur des Adapters sehr gering haltbar ist.

Wichtige Merkmale bei der Umrichteranordnung mit einem solchen Adapter sind, dass der erste Umrichter einen auf Stromschienen geführten Zwischenkreis aufweist,
wobei der zweite Umrichter einen auf Stromschienen geführten Zwischenkreis aufweist,
wobei der Adapter zur Verbindung der Zwischenkreise verwendet ist.

Von Vorteil ist dabei, dass eine einfache und gut isolierbare Verbindung zwischen den Zwischenkreisen mittels des Adapters herstellbar ist. Der Adapter ist dabei nur an seinen laschenartig herausragenden Abschnitten nicht isoliert, da diese jeweils in einem elektrischen Verbindungsbereich angeordnet sind, der vom jeweiligen Umrichter-Gehäuse geschützt ist.

Durch den schichtartigen Aufbau ist die Streckeninduktivität verringert ausgeführt und somit werden Resonanzfrequenzen zu höheren Frequenzen hin verschoben.

Bei einer vorteilhaften Ausgestaltung sind die Stromschienen der Zwischenkreise als langgestreckt stabförmige Stanz-Biegeteile ausgeführt,
insbesondere wobei in einem Endbereich eine Ausnehmung, insbesondere ein Loch, vorgesehen ist, insbesondere welche in Deckung bringbar ist mit der Ausnehmung an einer Stromschiene des Adapters, so dass eine Verbindungsschraube durchführbar ist. Von Vorteil ist dabei, dass eine einfache Verbindungstechnik verwendbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

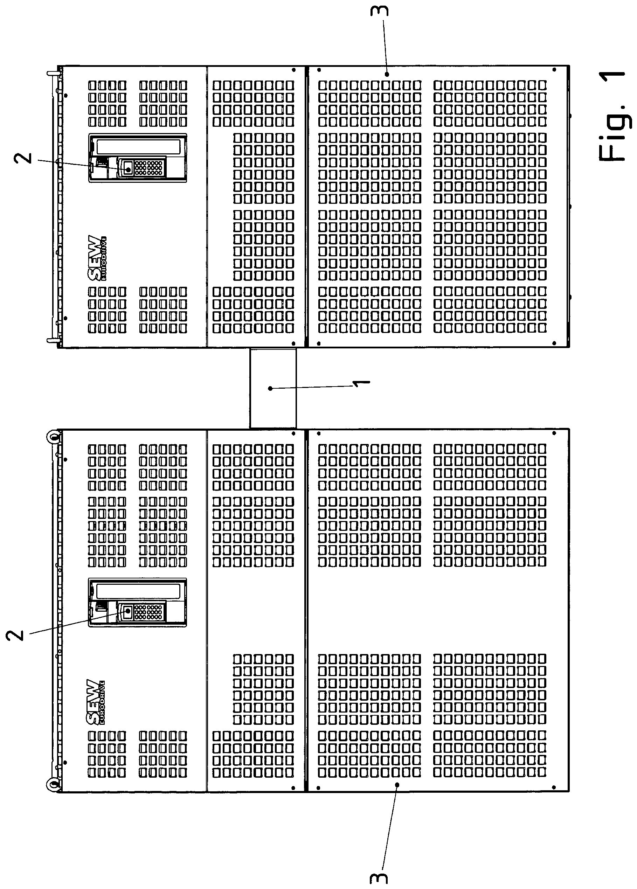

In der Figur 1 sind zwei Umrichter 3 gezeigt, deren Zwischenkreise mittels eines Adapters verbunden sind.

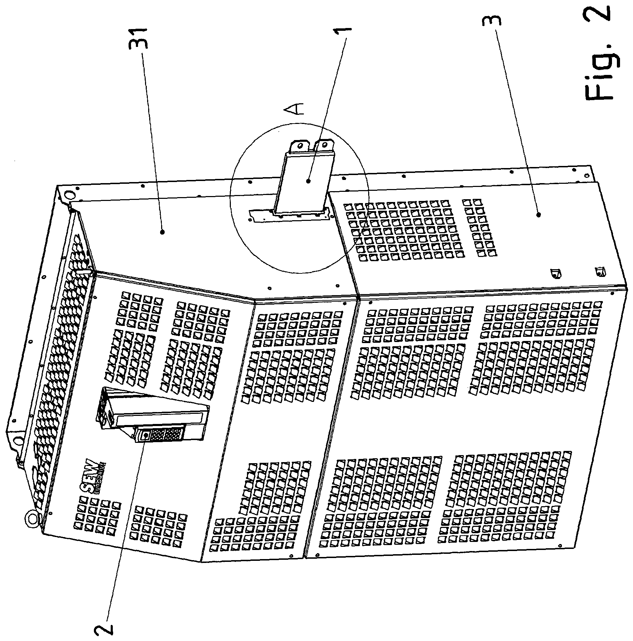

In der Figur 2 ist im Unterschied zu Figur 1 ein Umrichter 3 entfernt.

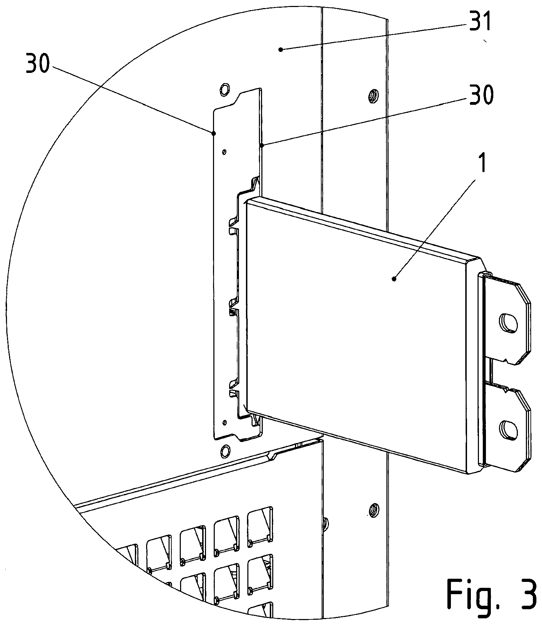

In der Figur 3 ist ein vergrößerter Ausschnitt aus Figur 2 gezeigt, wobei der Adapter näher gezeigt ist.

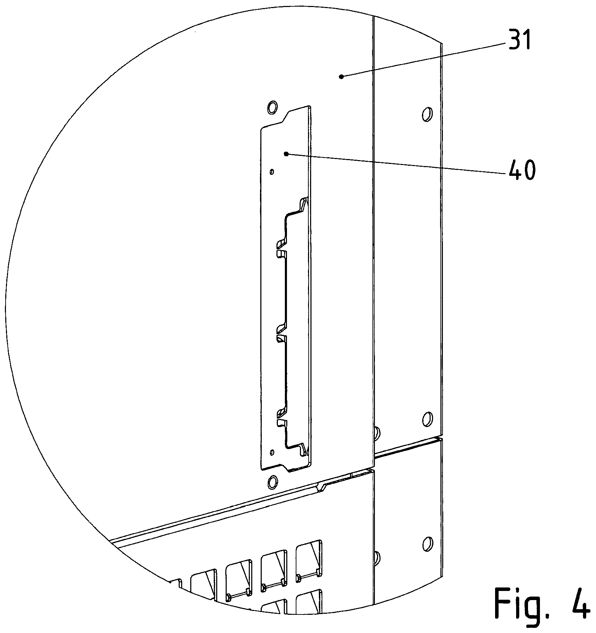

In der Figur 4 ist die verschlossene Schnittstelle für den Adapter gezeigt.
In der Figur 5 ist die Stromschienenverbindung der beiden Umrichter 3 näher dargestellt, wobei vom ersten Umrichter 3 die Stromschienen und vom zweiten Umrichter ein an dessen Stromschienen angeschlossenes Kondensatormodul des zweiten Umrichters 3 gezeigt ist.

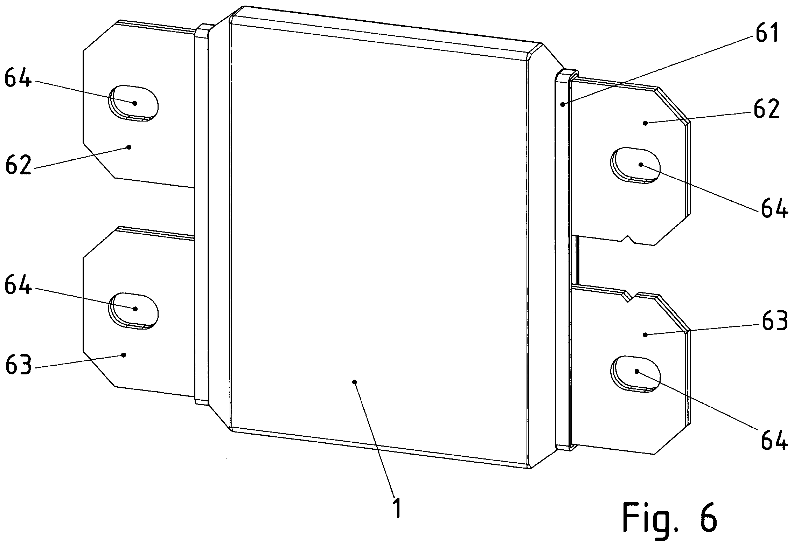

In der Figur 6 ist der Adapter in Schrägansicht dargestellt.
In der Figur 7 ist der Adapter in Explosionsdarstellung gezeigt.

Es wird darauf hingewiesen, dass "gehäusebildend" bedeutet, dass im eingebauten Zustand und bei Betrieb der Anlage ein Berührschutz stromleitender Teile, wie Stromschienen oder dergleichen, erreicht ist. Somit ist als gehäusebildendes Teil bevorzugt ein elektrisch isolierendes Teil, vorzugsweise aus Kunststoff, verwendbar.

Der erfindungsgemäße Adapter für eine elektrische Verbindung von Zwischenkreisen ist ein Verbinder von Geräten mit gleichartigen Anschlüsse. Die Geräte selbst dürfen dabei unterschiedlich sein. Beispielsweise sind die Geräte Umrichter verschiedener Baugröße.

Der Adapter ist zur Verbindung zweier Zwischenkreise von Umrichtern 3 vorgesehen. Dabei weist jeder Umrichter 3 ein Handbediengerät 2 auf, mit welchem Parameter einer Steuerelektronik des Umrichters speicherbar sind im Speicher der Steuerelektronik.

Die Steuerelektronik erzeugt pulsweitenmodulierte Ansteuersignale für Leistungshalbleiterschalter eines Wechselrichters. Der Wechselrichter speist einen Elektromotor, so dass dessen Drehzahl und/oder Drehmoment regelbar ist.

Der Wechselrichter wird aus dem Zwischenkreis versorgt, der ein oberes und unteres Zwischenkreispotential aufweist, das auf jeweiligen Stromschienen geführt ist.

Jeder Umrichter 3 weist Kondensatoren auf, welche mit dem Zwischenkreis elektrisch verbunden sind. Hierzu sind die Kondensatoren elektrisch parallel verschaltet und jeweils mit einem ersten Anschlusselement mit einer ersten Stromschiene 52 und mit einem anderen Anschlusselement mit einer zweiten Stromschiene 53 verbunden. Das Gehäuse jedes Kondensators ist auf seiner von den Anschlusselementen abgewandten Seite mit einem Kondensatormodulgehäuseblechteil 50 elastisch verbunden, wobei das Blechteil derart gebogen ist, dass thermisch bedingte Längenänderungen kompensierbar sind durch Auslenkung des gebogenen Verbindungsabschnitts am Blechteil. Dabei ist der Kondensator mit dem Verbindungsabschnitt mittels Schraubverbindung 51 verbunden.

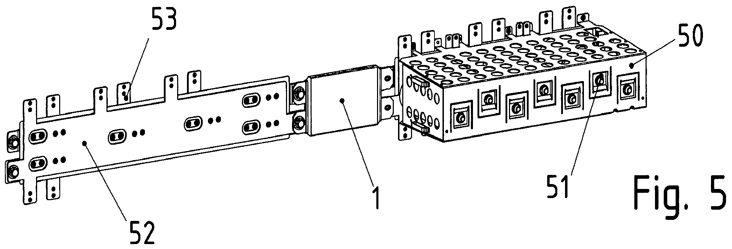

In Figur 5 ist das Kondensatormodul nur für einen der Umrichter 3 gezeigt. Beim anderen Umrichter 3 ist es ausgeblendet, so dass die Stromschienen (52 und 53) gut sichtbar sind.

Die Stromschienen (52, 53) der Umrichter 3 werden über einen Adapter verbunden, der in den jeweiligen Umrichter 3 einsteckbar ist. Dabei weist der Umrichter 3 ein Blechteil 51 auf, das als Gehäuseteil fungiert und eine Trennstelle 31, insbesondere Perforation, aufweist, an der ein Blechabschnitt entfernbar ist. Somit ist eine Ausnehmung herstellbar, durch die der Adapter mit den Endbereichen seiner Stromschienen (62, 63) einführbar ist und im Innenraum des Umrichters 3 mit den Stromschienen (52, 53) schraubverbindbar und/oder schweißverbindbar. Ist. Der Adapter ist auch an den den genannten Endbereichen gegenüberliegenden Endbereichen seiner Stromschienen (62, 63) verbindbar mit den Stromschienen des Zwischenkreises des benachbarten Umrichters.

Dabei besteht der Adapter aus Stromschienen 62 und 63, welche als Stanzteile oder als Stanz-Biegeteile hergestellt sind. Zum Verbinden weisen die Stromschienen in den Endbereichen laschenartig herausragende Randabschnitte auf, die jeweils eine Ausnehmung, wie Loch oder dergleichen, zum Durchführen einer jeweiligen Schraube aufweisen.

Zwischen den Stromschienen unterschiedlichen Potentials sind Isolierfolien abschnitte angeordnet, so dass die Stromschienen 62 und 63 einen ausreichenden Isolationsabstand aufweisen und somit ausreichend isolationsfest getrennt sind. Die Zwischenkreisspannung beträgt dabei mehr als 300 Volt, insbesondere zwischen 400 Volt und 600 Volt.

Gehäusebildend für den Adapter sind zwei Isoliermittel vorgesehen, wobei ein erstes äußeres Isoliermittel 1 als Schrumpfschlauch ausbildbar ist, das auf einem weiteren Isoliermittel 61 angeordnet ist, welches die Stromschienen 52 und 53 mit Isolierfolien 70 umgibt, wobei jedoch die als Anschlussbereiche vorgesehenen laschenartigen Endbereiche der Stromschienen herausragen. Das weitere Isoliermittel 61 ist ebenfalls als Schrumpfschlauch ausführbar. Somit ist dann eine doppelte Isolierung vorhanden und daher eine sichere Trennung und Isolation gewährleistet.

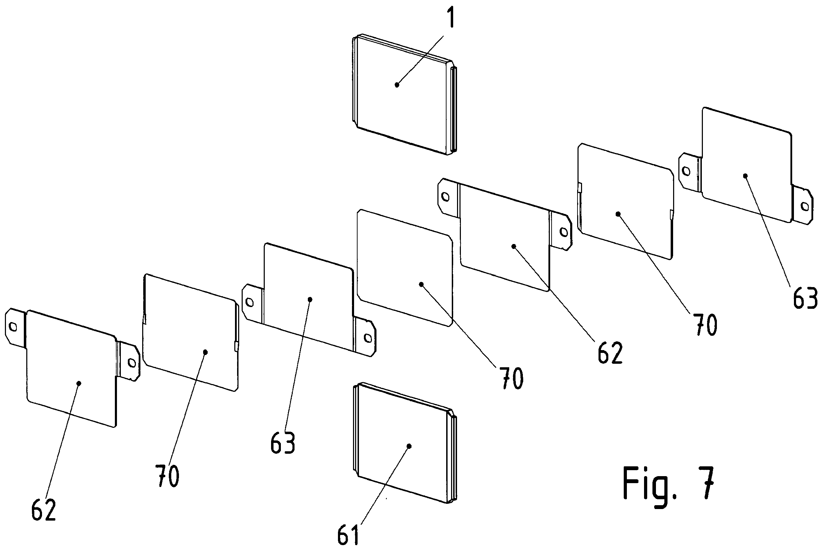

Wie in Figur 7 gezeigt, ist der Adapter innerhalb der Isoliermittel 1 und 61 schichtartig aufgebaut, wobei eine Stromschiene 62 für das untere Zwischenkreispotential gefolgt ist von einer Isolierfolie 70 und daraufhin von einer Stromschiene 63 für das obere Zwischenkreispotential, die wiederum gefolgt wird von einer Isolierfolie 70, die wiederum gefolgt wird von einer Stromschiene 62. Daraufhin ist eine Isolierfolie 70 angeordnet und eine Stromschiene 63.

Somit sind für jedes Zwischenkreispotential zwei oder bei anderen erfindungsgemäßen Ausführungsbeispielen mehr Stromschienen verwendet, wobei zwischen jeweils zwei benachbarten Stromschienen gleichen Potentials eine Stromschiene des anderen Zwischenkreispotentials angeordnet ist. Zwischen benachbarten Stromschienen, die zueinander unterschiedliches Potential aufweisen, ist jeweils eine Isolierfolie 70 angeordnet.

Die Stromschienen (62, 63) sind jeweils gleichartig geformt, wobei die laschenartigen Anschlussabschnitte bei der ersten Stromschiene in der oberen Hälfte und bei der zweiten Stromschiene wegen deren 180° verdrehten Ausrichtung in der unteren Hälfte eines rechteckförmigen und plattenartig ausgebildeten Stanzteils oder Stanz-Biegeteil angeordnet sind. Die untere Hälfte der ersten Stromschiene 62 beziehungsweise die obere Hälfte der zweiten Stromschiene 63 wirkt dabei als Kühlkörper und vergrößert die Oberfläche. Hierdurch wird die Wärme besser abgeführt und die Temperatur reduziert, wodurch dann auch die Ohmschen Verluste verringert werden.

Somit und wegen des schichtartigen oder sandwichartigen Aufbaus des Adapters ist eine besonders geringe Leitungsinduktivität der Stromschienen erreicht und somit die in Zwischenkreisen auftretenden Resonanzen auf höhere Frequenzbereiche verschiebbar.

Bei weiteren erfindungsgemäßen Ausführungsbeispielen wird an jeder Stromschiene eine Kühlkörper-artige Struktur, insbesondere umfassend Kühlfinger, vorgesehen.

### Bezugszeichenliste

1 Isoliermittel des Adapters
2 Handbediengerät
3 Umrichter
30 Trennstelle
31 Gehäuseblech
40 Blechabschnitt
50 Kondensatormodulgehäuse
51 Schraubverbindung
52 Stromschiene
53 Stromschiene
61 weiteres Isoliermittels
62 Stromschiene
63 Stromschiene
64 Ausnehmung
70 Isoliermatte, insbesondere Isolierfolie

## Patentansprüche

1. Verbinder von Geräten mit gleichartigen Anschlüssen, insbesondere Verbinder für die elektrische Verbindung von Zwischenkreisen,
wobei der Verbinder einen von einer elektrisch isolierenden Umhüllung umschlossenen Stapel von Stromschienen (62, 63) aufweist,
wobei der Stapel zwischen den Stromschienen (62, 63) angeordnete Isolierschichten aufweist,
wobei die Stromschienen (62, 63) derart mit laschenartigen Abschnitten kontaktiert sind, dass zwei oder mehr parallel im Stapel angeordnete Stromschienen (62, 63) auf demselben elektrischen Potential liegen,
wobei im Stapel jeweils benachbarte, mittels einer Isolierschicht getrennte Stromschienen (62, 63) Stromschienen (62, 63) nicht mit denselben laschenartigen Abschnitten kontaktiert sind, insbesondere so dass sie auf ein anderes Potential legbar sind.

2. Verbinder nach Anspruch 1,
**dadurch gekennzeichnet, dass**
zur Durchführung eines ersten Potentials zwei oder mehr der Stromschienen (62, 63) als parallel angeordnete Stromschienen (62, 63), insbesondere gleichartig ausgeführte, ausgeführt sind, insbesondere und elektrisch miteinander verbunden sind,
insbesondere wobei zur Durchführung eines zweiten Potentials zwei oder mehr der Stromschienen (62, 63) als parallel angeordnete Stromschienen (62, 63), insbesondere gleichartig ausgeführte, ausgeführt sind, insbesondere und elektrisch miteinander verbunden sind,
insbesondere wobei der schichtartige Aufbau insgesamt vier beziehungsweise mehr Stromschienen (62, 63) aufweist,
insbesondere wobei die Streckeninduktivität des durchgeleiteten Stroms verringert ist.

3. Verbinder nach einem der vorangegangenen Ansprüche,
**dadurch gekennzeichnet, dass**
zwei zueinander nächstbenachbarte Stromschienen (62, 63) jeweils unterschiedliches Potential führen,
insbesondere zur Verringerung der Streckeninduktivität,
insbesondere wobei ein jeweiliges Isoliermittel (1) zwischen die beiden zueinander nächstbenachbarten Stromschienen (62, 63) zwischengeordnet ist.

4. Verbinder nach einem der vorangegangenen Ansprüche,
**dadurch gekennzeichnet, dass**
das gehäusebildend umgebende Isoliermittel (1) zumindest einen Schrumpfschlauch aufweist oder als Schrumpfschlauch ausgebildet ist oder als zumindest zwei Schrumpfschläuche ausgebildet ist, insbesondere wobei ein erster zumindest den zweiten Schrumpfschlauch umgibt.

5. Verbinder nach einem der vorangegangenen Ansprüche,
**dadurch gekennzeichnet, dass**
das jeweils zwischen den Stromschienen (62, 63) angeordnete Isoliermittel (1) eine Isolierfolie ist.

6. Verbinder nach einem der vorangegangenen Ansprüche,
**dadurch gekennzeichnet, dass**
jede Stromschiene (62, 63) als Stanzteil oder Stanz-Biegeteil gefertigt ist, insbesondere aus Kupfer-haltigem Blech.

7. Verbinder nach einem der vorangegangenen Ansprüche,
**dadurch gekennzeichnet, dass**
die Stromschienen (62, 63) gleichartig, insbesondere identisch, ausgeführt sind, insbesondere hinsichtlich aller Eigenschaften, wie Form und Masse und Material und Abmessungen.

8. Verbinder nach einem der vorangegangenen Ansprüche,
**dadurch gekennzeichnet, dass**
die Stromschienen (62, 63) jeweils einen rechteckförmigen plattenförmigen Grundkörper aufweisen, an dem laschenartige Abschnitte, insbesondere Fortsätze, herausragen, insbesondere welche eine Ausnehmung, insbesondere Loch, aufweisen zur Durchführung einer Verbindungsschraube.

9. Verbinder nach Anspruch 8,
**dadurch gekennzeichnet, dass**
die laschenartigen Abschnitte, insbesondere Fortsätze, an zwei gegenüberliegenden Seiten des Grundkörpers angeordnet sind.

10. Verbinder nach einem der Ansprüche 9 oder 10,
**dadurch gekennzeichnet, dass**
für den an einem laschenartigen Abschnitt eintretenden Strom beim Durchströmen der Stromschiene (62, 63) bis zum Heraustreten an dem gegenüberliegenden laschenartigen Abschnitt ein entlang der Durchströmungsrichtung zunächst zunehmender und dann wieder abnehmender Querschnitt des Grundkörpers wirksam ist, insbesondere indem die Stromschiene (62, 63) eine entsprechende Verdickung aufweist.

11. Verbinder nach einem der vorangegangenen Ansprüche,
**dadurch gekennzeichnet, dass**
eine oder jede Stromschiene (62, 63) einen Kühlkörperbereich aufweist, insbesondere mit einer oder mehreren Kühlrippen,
insbesondere wobei der auch der Kühlkörperbereich von dem weiteren Isoliermittel umhüllt ist und am Grundkörper der Stromschiene (62, 63) ausgeformt ist, insbesondere wobei der Kühlkörperberiech quer zur Durchströmungsrichtung herausragt.

12. Umrichteranordnung mit einem Verbinder nach einem der vorangegangenen Ansprüche, wobei die Geräte zwei Umrichter (3) sind,
**dadurch gekennzeichnet, dass**
ein erster Umrichter (3) einen auf Stromschienen (62, 63) des ersten Umrichters (3) geführten Zwischenkreis aufweist,
wobei ein zweiter Umrichter (3) einen auf Stromschienen (62, 63) des zweiten Stromrichters geführten Zwischenkreis aufweist,
wobei der Verbinder den Zwischenkreis des ersten Umrichters (3) mit dem Zwischenkreis des zweiten Umrichters (3) elektrisch verbindet,
insbesondere wobei eine erste Stromschiene (62, 63) jedes Umrichters (3) ein erstes Zwischenkreispotential führt und eine zweite Stromschiene (62, 63) ein anderes Zwischenkreispotential führt.

13. Umrichteranordnung nach Anspruch 12, **dadurch gekennzeichnet, dass**
die Stromschienen (62, 63) des Verbinders schichtartig gestapelt angeordnet sind,
wobei zu einer Stromschiene (62, 63) des Verbinders eines ersten Zwischenkreispotentials beidseitig nächstbenachbart eine Stromschiene (62, 63) des Verbinders eines anderen Zwischenkreispotentials angeordnet ist,
insbesondere wobei ein Isoliermittel (1) zwischen den beiden Stromschienen (62, 63) unterschiedlichen Potentials angeordnet ist.

14. Umrichteranordnung nach Anspruch 12 oder 13, **dadurch gekennzeichnet, dass**
die Stromschienen (62, 63) der Zwischenkreise als langgestreckt stabförmige Stanz-Biegeteile ausgeführt sind,
insbesondere wobei in einem Endbereich eine Ausnehmung, insbesondere ein Loch, vorgesehen ist, insbesondere welche in Deckung bringbar ist mit der Ausnehmung an einer Stromschiene (62, 63) des Verbinders, so dass eine Verbindungsschraube durchführbar ist.

## Claims

1. A connector for devices having similar connections, in particular a connector for electrically connecting intermediate circuits,
wherein the connector has a stack of busbars (62, 63) surrounded by an electrically insulating sheath,
wherein the stack has insulating layers arranged between the busbars (62, 63),
wherein the busbars (62, 63) are contacted by tab-like portions in such a way that two or more busbars (62, 63) arranged parallel in the stack are at the same electrical potential,
wherein, in the stack, respectively adjacent busbars (62, 63) separated by means of an insulating layer are not contacted by the same tab-like portions, in particular so that they can be connected to a different potential.

2. The connector according to Claim 1,
**characterised in that**,
to realise a first potential, two or more of the busbars (62, 63) are designed as parallel-arranged, in particular similarly designed, busbars (62, 63), in particular and electrically connected to one another,
in particular wherein, to realise a second potential, two or more of the busbars (62, 63) are designed as parallel-arranged, in particular similarly designed, busbars (62, 63), in particular and electrically connected to one another,
in particular wherein the layered structure has a total of four or more busbars (62, 63),
in particular wherein the path inductance of the transmitted current is reduced.

3. The connector according to one of the preceding claims,
**characterised in that**
two mutually nearest adjacent busbars (62, 63) each carry a different potential,
in particular to reduce the path inductance,
in particular wherein a respective insulator (1) is arranged between the two mutually nearest adjacent busbars (62, 63).

4. The connector according to one of the preceding claims,
**characterised in that**
the surrounding housing-forming insulator (1) has at least one shrink tube or is formed as a shrink tube or is formed as at least two shrink tubes, in particular wherein a first shrink tube at least surrounds the second shrink tube.

5. The connector according to one of the preceding claims,
**characterised in that**
the insulator (1) arranged between the busbars (62, 63) in each case is an insulating foil.

6. The connector according to one of the preceding claims,
**characterised in that**
each busbar (62, 63) is manufactured as a punched part or punched and bent part, in particular from copper-containing sheet metal.

7. The connector according to one of the preceding claims,
**characterised in that**
the busbars (62, 63) are similarly, in particular identically, designed, in particular in terms of all properties, such as shape and mass and material and dimensions.

8. The connector according to one of the preceding claims,
**characterised in that**
the busbars (62, 63) each have a rectangular plate-shaped base body on which tab-like portions, in particular extensions, protrude,
in particular which have a recess, in particular a hole, for guiding through a connecting screw.

9. The connector according to Claim 8,
**characterised in that**
the tab-like portions, in particular extensions, are arranged on two opposite sides of the base body.

10. The connector according to one of Claims 9 or 10,
**characterised in that**,
a cross-section of the base body which firstly increases and then decreases again in the throughflow direction is effective with regard to the current entering at a tab-like portion during its flow through the busbar (62, 63) to the point where it exits at the opposite tab-like portion, in particular **in that** the busbar (62, 63) has a corresponding thickened portion.

11. The connector according to one of the preceding claims,
**characterised in that**
one or each busbar (62, 63) has a cooling body region, in particular having one or more cooling ribs,
in particular wherein also the cooling body region is sheathed by the further insulator and is moulded on the base body of the busbar (62, 63), in particular wherein the cooling body region protrudes transversely to the throughflow direction.

12. A converter arrangement having a connector according to one of the preceding claims, wherein the devices are two converters (3),
**characterised in that**
a first converter (3) has an intermediate circuit carried on busbars (62, 63) of the first converter (3),
wherein a second converter (3) has an intermediate circuit carried on busbars (62, 63) of the second converter, wherein the connector connects the intermediate circuit of the first converter (3) to the intermediate circuit of the second converter (3),
in particular wherein a first busbar (62, 63) of each converter (3) carries a first intermediate circuit potential and a second busbar (62, 63) carries a different intermediate circuit potential.

13. The converter arrangement according to Claim 12,
**characterised in that**
the busbars (62, 63) of the connector are arranged in stacked layers,
wherein, arranged nearest adjacent, on both sides, to a busbar (62, 63) of the connector with a first intermediate circuit potential, is a busbar (62, 63) of the connector with a different intermediate circuit potential,
in particular wherein an insulator (1) is arranged between the two busbars (62, 63) with different potentials.

14. The converter arrangement according to Claim 12 or 13,
**characterised in that**
the busbars (62, 63) of the intermediate circuits are designed as elongated rod-shaped punched and bent parts, in particular wherein, in one end region, a recess, in particular a hole, is provided, in particular which may be brought into congruence with the recess in a busbar (62, 63) of the connector so that a connector screw can be guided through.

## Revendications

1. Connecteur d'appareils doté de connexions similaires, en particulier connecteur pour la connexion électrique de circuits intermédiaires,
le connecteur présentant un empilement de barres conductrices (62, 63) entouré d'une enveloppe électriquement isolante,
ledit empilement présentant des couches isolantes disposées entre les barres conductrices (62, 63),
dans lequel les barres conductrices (62, 63) sont mises en contact avec des parties en forme de patte de telle sorte que deux ou plusieurs barres conductrices (62, 63) disposées en parallèle dans l'empilement se trouvent au même potentiel électrique, dans lequel, dans l'empilement, des barres conductrices (62, 63) adjacentes, séparées au moyen d'une couche isolante, ne sont pas mises en contact avec les mêmes parties en forme de patte, en particulier pour qu'elles puissent se trouver à un potentiel différent.

2. Connecteur selon la revendication 1,
**caractérisé en ce que**,
pour réaliser un premier potentiel, deux ou plusieurs des barres conductrices (62, 63) sont réalisées sous la forme de barres conductrices (62, 63) disposées en parallèle, en particulier de barres conductrices réalisées de façon similaire, en particulier et électriquement reliés entre elles,
en particulier dans lequel, pour réaliser un deuxième potentiel, deux ou plusieurs des barres conductrices (62, 63) sont réalisées sous la forme de barres conductrices (62, 63) disposées en parallèle, en particulier de barres conductrices réalisées de façon similaire, en particulier et électriquement reliés entre elles,
en particulier dans lequel la structure en couche présente au total quatre barres conductrices (62, 63) ou plus,
en particulier dans lequel l'inductance de ligne du courant transporté est diminuée.

3. Connecteur selon l'une des revendications précédentes,
**caractérisé en ce que**
deux barres conductrices (62, 63) directement adjacentes conduisent chacune un potentiel différent, en particulier pour diminuer l'inductance de ligne,
en particulier dans lequel un moyen isolant respectif (1) est interposé entre les deux barres conductrices (62, 63) directement adjacentes.

4. Connecteur selon l'une des revendications précédentes,
**caractérisé en ce que**
le moyen isolant (1) entourant et formant boîtier présente au moins une gaine thermorétractable ou est réalisé sous la forme d'une gaine thermorétractable ou est réalisé sous la forme d'au moins deux gaines thermorétractables, en particulier dans lequel une première gaine thermorétractable entoure au moins la deuxième gaine thermorétractable.

5. Connecteur selon l'une des revendications précédentes,
**caractérisé en ce que**
le moyen isolant (1) disposé respectivement entre les barres conductrices (62, 63) est une feuille isolante.

6. Connecteur selon l'une des revendications précédentes,
**caractérisé en ce que**
chaque barre conductrice (62, 63) est réalisée sous la forme d'une pièce découpée ou d'une pièce découpée et pliée, en particulier à partir d'une tôle contenant du cuivre.

7. Connecteur selon l'une des revendications précédentes,
**caractérisé en ce que**
les barres conductrices (62, 63) sont réalisées de façon similaire, en particulier identique, en particulier en ce qui concerne toutes les propriétés telles que la forme et la masse, le matériau et les dimensions.

8. Connecteur selon l'une des revendications précédentes,
**caractérisé en ce que**
les barres conductrices (62, 63) présentent chacune un corps de base rectangulaire en forme de plaque duquel font saillie des parties en forme de patte, en particulier des prolongements, qui présentent en particulier un évidement, en particulier un trou, pour le passage d'une vis de liaison.

9. Connecteur selon la revendication 8,
**caractérisé en ce que**
les parties en forme de patte, en particulier les prolongements, sont disposé(e)s sur deux côtés opposés du corps de base.

10. Connecteur selon l'une des revendications 9 ou 10,
**caractérisé en ce que**,
pour le courant entrant au niveau d'une partie en forme de patte lors de son passage à travers la barre conductrice (62, 63) jusqu'à sa sortie au niveau de la partie en forme de patte opposée, une section transversale du corps de base qui augmente initialement puis diminue à nouveau dans la direction de passage du courant est active, la barre conductrice (62, 63) présentant en particulier un épaississement correspondant.

11. Connecteur selon l'une des revendications précédentes,
**caractérisé en ce**
**qu'**une ou chaque barre conductrice (62, 63) présente une zone de dissipateur thermique, en particulier avec une ou plusieurs ailettes de refroidissement,
en particulier dans lequel la zone de dissipateur thermique est également enveloppée par l'autre moyen isolant et est formée sur le corps de base de la barre conductrice (62, 63), en particulier dans lequel la zone de dissipateur thermique fait saillie transversalement à la direction de passage du courant.

12. Agencement de variateurs comportant un connecteur selon l'une des revendications précédentes, les appareils étant deux variateurs (3),
**caractérisé en ce**
**qu'**un premier variateur (3) présente un circuit intermédiaire conduit sur des barres conductrices (62, 63) du premier variateur (3),
dans lequel un deuxième variateur (3) présente un circuit intermédiaire conduit sur des barres conductrices (62, 63) du deuxième variateur,
dans lequel le connecteur relie électriquement le circuit intermédiaire du premier variateur (3) au circuit intermédiaire du deuxième variateur (3),
en particulier dans lequel une première barre conductrice (62, 63) de chaque variateur (3) conduit un premier potentiel de circuit intermédiaire et une deuxième barre conductrice (62, 63) conduit un potentiel de circuit intermédiaire différent.

13. Agencement de variateurs selon la revendication 12,
**caractérisé en ce que**
les barres conductrices (62, 63) du connecteur sont disposées en couches empilées, dans lequel de chaque côté d'une barre conductrice (62, 63) du connecteur d'un premier potentiel de circuit intermédiaire est disposée de façon adjacente une barre conductrice (62, 63) du connecteur d'un autre potentiel de circuit intermédiaire,
en particulier dans lequel un moyen isolant (1) est disposé entre les deux barres conductrices (82, 63) de potentiel différent.

14. Agencement de variateurs selon la revendication 12 ou 13,
**caractérisé en ce que**
les barres conductrices (62, 63) des circuits intermédiaires sont réalisées sous la forme de pièces découpées et pliées en forme de barres allongées,
en particulier dans lequel un évidement, en particulier un trou, est prévu dans une zone d'extrémité, lequel évidement peut en particulier être mis en coïncidence avec l'évidement sur une barre conductrice (62, 63) du connecteur, afin de permettre le passage d'une vis de liaison.
